# EUROPEAN PATENT APPLICATION

(11) **EP 4 460 035 A1**
(43) Date of publication of application: **06.11.2024**
(21) Application number: 22916161.7
(22) Date of filing: 28.12.2022
(51) Int. Cl.: H04R 1/10, H04R 25/00

(54) **ELECTRONIC DEVICE**

(30) Priority: 28.12.2021 JP 2021214095
(71) Applicant: Sony Semiconductor Solutions Corporation, Atsugi-shi, Kanagawa 243-0014 (JP); Sony Group Corporation, Tokyo 108-0075 (JP)
(72) Inventor: IMAI, Tadashi, Atsugi-shi, Kanagawa 243-0014 (JP); KONDO, Fumitaka, Atsugi-shi, Kanagawa 243-0014 (JP); YOSHINO, Yoshitaka, Atsugi-shi, Kanagawa 243-0014 (JP); SHIGA, Fumiko, Tokyo 108-0075 (JP)
(74) Representative: D Young & Co LLP
(86) International application number: PCT/JP2022/048474
(87) International publication number: WO 2023/127939

(57) **Abstract**

A charge output to the energy storage device is generated while the electronic device is worn.

An electronic device including a rectifier circuit that receives electric field energy of a radio wave or a quasi-electrostatic field in space and rectifies an alternating current (AC) signal into a direct current (DC). An antenna part is provided to include a first antenna element that is a conductor to be used in contact with a human body in a state where the human body is not grounded to a ground that is an earth; and a second antenna element that is a conductor different from the first antenna element and is provided so as not to be in contact with the human body. An input line is connected in series to the rectifier circuit, the input line carrying an AC signal, from AC signals output from the antenna part, output to the rectifier circuit from the first antenna element that is used in contact with the human body. An energy storage device is provided to store an output of the rectifier circuit. A contact surface of the first antenna element with the human body includes an electrode including any one or a combination of gold, silver, aluminum, copper, iron, nickel, an alloy, a conductive resin, and a conductive rubber.

## Description

### TECHNICAL FIELD

The present technology relates to an electronic device including an energy storage device and used as a wearable device, and particularly relates to an electronic device having an energy harvesting function.

### BACKGROUND ART

Air batteries are used in electronic devices such as hearing aids. Air batteries have been small and lightweight but have had short battery lives and are not rechargeable. In addition, hearing aids using rechargeable batteries are also known, but the hearing aids require charging with dedicated chargers and cannot be used while charging, which has been problematic. Therefore, it is preferable for the battery to have a long usable time. However, as a built-in battery, a lightweight battery is desirable.

Conventionally, a hearing aid that does not use a built-in battery has been proposed (cf. Patent Document 1). That is, the hearing aid includes an adapter for power supply and audio input, and an audio signal from a device connected to the adapter via a universal serial bus (USB) is amplified and supplied to the hearing aid's speaker. Power supplied through the USB is used.

### CITATION LIST

### PATENT DOCUMENT

Patent Document 1: Japanese Patent Application Laid-Open No. 2015-005953

### SUMMARY OF THE INVENTION

### PROBLEMS TO BE SOLVED BY THE INVENTION

In a case where the battery adapter for hearing aids described in Patent Document 1 is used, a built-in battery can be made unnecessary, but there is a need to connect the adapter and the hearing through a cable, which is inconvenient for use as a hearing aid.

An object of the present technology is to provide an electronic device that can generate a charging power supply for an energy storage device while worn, without the need for an adapter to be connected via a cable.

### SOLUTIONS TO PROBLEMS

the present technology is an electronic device including a rectifier circuit that receives electric field energy of a radio wave or a quasi-electrostatic field in space and rectifies an alternating current (AC) signal into a direct current (DC). An antenna part is provided to include a first antenna element that is a conductor to be used in contact with a human body in a state where the human body is not grounded to a ground that is an earth; and a second antenna element that is a conductor different from the first antenna element and is provided so as not to be in contact with the human body. An input line is connected in series to the rectifier circuit, the input line carrying an AC signal, from AC signals output from the antenna part, output to the rectifier circuit from the first antenna element that is used in contact with the human body. An energy storage device is provided to store an output of the rectifier circuit. A contact surface of the first antenna element with the human body includes an electrode including any one or a combination of gold, silver, aluminum, copper, iron, nickel, an alloy, a conductive resin, and a conductive rubber.

### BRIEF DESCRIPTION OF DRAWINGS

Fig. 1 is a block diagram of an example of a power generation device.
Figs. 2A, 2B, and 2C are a plan view and cross-sectional views of an example of an antenna device included in the power generation device.
Figs. 3A and 3B are a plan view and a cross-sectional view of another example of the antenna device included in the power generation device.
Figs. 4A and 4B are schematic diagrams for explaining the antenna device.
Fig. 5 is a connection diagram illustrating a configuration of an example of a rectifier circuit.
Fig. 6 is a graph for explaining characteristics of diodes of the rectifier circuit.
Figs. 7A and 7B are connection diagrams for explaining the operation of the rectifier circuit.
Figs. 8A and 8B are timing charts for explaining the operation of the rectifier circuit.
Figs. 9A to 9D are schematic diagrams for explaining induction of energy received from an antenna.
Fig. 10 is a schematic diagram for explaining a first example of an antenna device including a device board.
Fig. 11 is a schematic diagram for 11 explaining a second example of the antenna device including the device board.
Figs. 12A, 12B, and 12C are schematic diagrams illustrating specific examples of a second antenna element.
Fig. 13 is a connection diagram of an example of a rectifier circuit using a metal-oxide-semiconductor field-effect transistor (MOSFET) instead of a diode.
Fig. 14 is a perspective view of one embodiment of true wireless earphones to which the present invention is applied.
Fig. 15 is a schematic exploded perspective view of one embodiment of the true wireless earphone.
Fig. 16 is a schematic diagram illustrating a configuration of one embodiment of the true wireless earphone.
Fig. 17 is a perspective view of another embodiment of the true wireless earphones to which the present invention is applied.
Fig. 18 is a schematic exploded perspective view of another embodiment of the true wireless earphone.
Fig. 19 is a schematic diagram for explaining an example of a charging device to which the present invention is applied.
Fig. 20 is a perspective view of still another embodiment of wireless earphones to which the present invention is applied.
Fig. 21 is a perspective view of still another embodiment of wireless headphones to which the present invention is applied.
Fig. 22 is a perspective view of one embodiment of a hearing aid to which the present invention is applied.
Fig. 23 is a perspective view of one embodiment of a neck cooler as a temperature adjustment device to which the present invention is applied.
Fig. 24 is a perspective view of one embodiment of a neck warmer as a temperature adjustment device to which the present invention is applied.
Fig. 25 is a perspective view of one embodiment of smart glasses to which the present invention is applied.

### MODE FOR CARRYING OUT THE INVENTION

The embodiments described below are preferred specific examples of the present technology, and various technically preferable limitations are given. However, the scope of the present technology is not limited to these embodiments unless there is a description to limit the present technology in the following description. Furthermore, in the following description, the same designations and reference numerals indicate the same or similar constituent elements, and redundant description will be omitted as appropriate.

The present technology uses a power generation device (so-called energy harvester) capable of generating electric power while worn on a human body (meaning a body surface). There is a great deal of electric field energy around us, which can be divided into low-frequency components and high-frequency components. For example, a leakage electric field (50 Hz/60 Hz) from a home alternating current (AC) power supply, noise present in the vicinity of a personal computer, a voltage generated when a person walks, and the like are low-frequency components. These are referred to as quasi-electrostatic fields (near field). On the other hand, radio broadcasting (AM/FM), television broadcasting, mobile phone radio waves, and the like are high-frequency components. These are referred to as radio waves (far field). Electric field energy is induced in a human body, and hence the human body can be used as an antenna to receive electronic field energy from radio waves and a quasi-electrostatic field (near field) in space. That is, when a human body is present while floating in space, various AC power (AC current) flows through the human body. Therefore, the human body is regarded as an antenna, and this power is efficiently converted into energy.

In connection with a rectifier circuit at a subsequent stage, an input terminal portion that contacts a human body and uses the human body itself as an antenna element preferably has a high impedance for reception. In particular, the input terminal portion is connected in series to the rectifier circuit without providing a matching circuit for a frequency. The rectifier circuit rectifies the output signal of the antenna using a diode with a very small reverse current relative to the forward current. As a result, it is possible to efficiently receive power not only from radio waves but also from a quasi-electrostatic field (near field), which is not radio waves having frequencies of 50/60 Hz that leak from a very small power supply. The quasi-electrostatic field is a voltage phenomenon that does not have propagating properties, unlike a radiated electromagnetic field, commonly known as radio waves, and is distributed like an electrostatic charge in the vicinity of a human, a vehicle, or a substance. The electrostatic field is regarded as making no change with time, whereas the quasi-electrostatic field has a frequency component and changes with time.

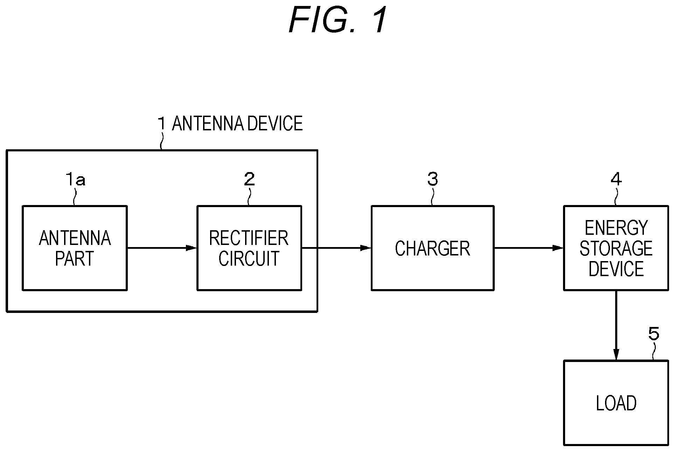

Fig. 1 illustrates a configuration of a power generation device equipped with an energy harvesting function according to the present technology. Electric field energy is received by a dipole structure antenna part 1a including a first antenna element and a second antenna element, and the output of the antenna part 1a is supplied to a rectifier circuit 2. The antenna part 1a and the rectifier circuit 2 constitute an antenna device 1.

The output of the rectifier circuit 2 is supplied to a charger 3. An energy storage device 4 is connected to the charger 3. The energy storage device 4 is charged by the charger 3. The charger 3 may control the discharge of the energy storage device 4. The antenna device 1, the charger 3, and the energy storage device 4 constitute a power generation device. A load 5 is connected to the energy storage device 4. The load 5 is operated by the power stored in the energy storage device 4. The load 5 is a microcomputer, a wireless communication part, a sensor, or the like. The output of the sensor is wirelessly transmitted under the control of the microcomputer.

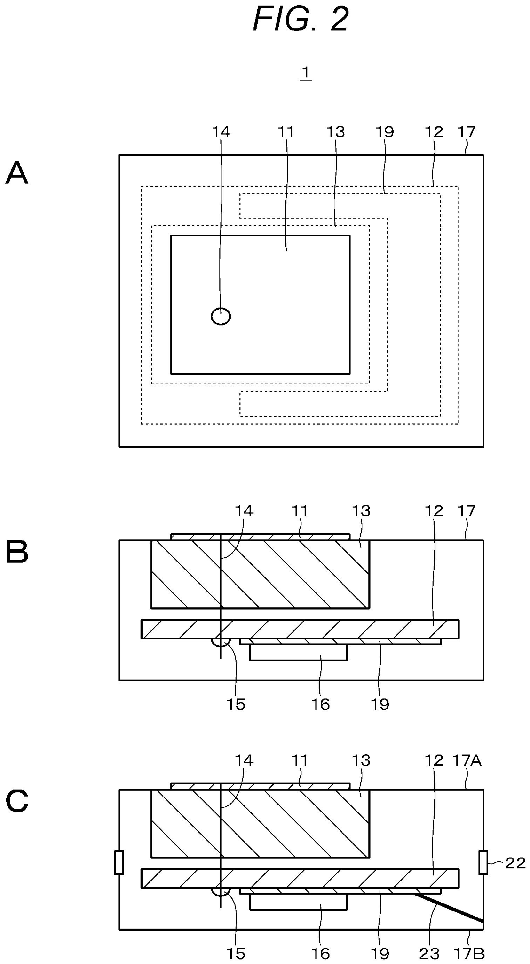

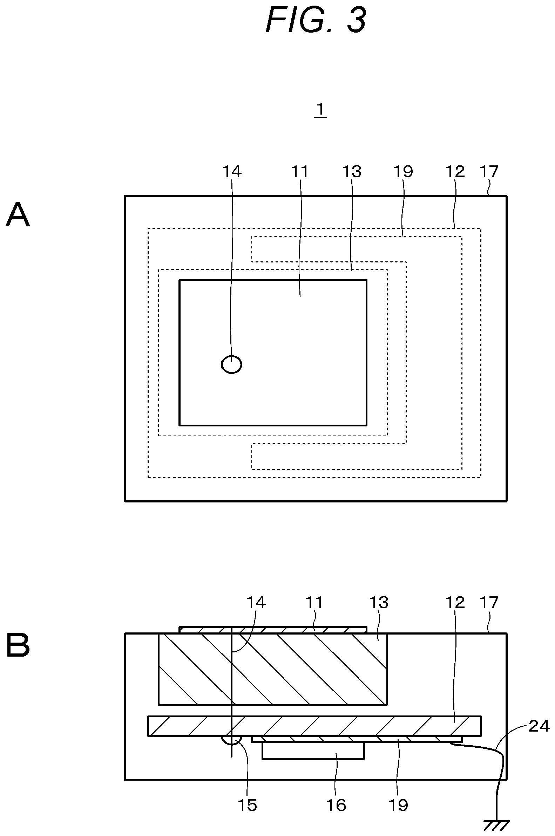

The antenna part 1a of the antenna device 1 includes a first antenna element and a second antenna element that are in contact with a human body (body surface). An example of the antenna device 1 will be described with reference to Fig. 2A (plan view), Fig. 2B (cross-sectional view), Fig. 2C (cross-sectional view), Fig. 3A (plan view), and Fig. 3B (cross-sectional view). As illustrated in Figs. 2A, 2B, 2C, 3A, and 3B, first antenna element 11 in contact with the human body is formed in a plate shape (patch shape). The antenna element 11 has a plate shape including a conductor such as gold, silver, aluminum, copper, iron, nickel, an alloy, or the like. The contact surface of the antenna element 11 with the human body may be coated with resin.

Moreover, as the antenna element 11, for example, a conductive resin, a conductive rubber, or the like containing silicone blended with carbon, metal, or the like may be used. The use of the conductive resin enables, for example, easy formation of electrodes in various shapes. Furthermore, the use of the conductive rubber enables the formation of an electrode that can be elastically deformed, an electrode having high adhesion, and the like. In addition, the material of the antenna element 11 is not limited, and the materials described above may be used alone, or the electrodes may be configured by combining the respective materials.

In Figs. 2B and 2C, for example, the plate-shaped (patch-shaped) antenna element 11 and a device board (circuit board) 12 are disposed to face each other, and a dielectric plate 13 is interposed between the antenna element 11 and the device board 12. The dielectric plate 13 may not be provided, and a space is formed between the antenna element 11 and the device board 12.

To electrically connect the antenna element 11 and the device board 12, one end of the antenna element 11 and one end of a conductive pin 14 are electrically connected, and the other end of the conductive pin 14 penetrates the device board 12 and is soldered to a signal path electrode on the back surface of the device board 12. The antenna element 11 and a ground that includes a copper foil pattern on the device board 12 constitute the antenna part 1a. The ground is the second antenna element. Such an antenna part 1a has a structure of a T-type antenna using a flat plate as an antenna element. A connection portion between the signal path electrode of the device board 12 and the conductive pin 14 serves as a feeding point 15 of the antenna. A circuit part 16 is provided on, for example, the back surface of the device board 12.

The antenna device having the configuration described above is housed in a case 17. The contact surface of the case 17 other than the antenna element 11 includes an insulating material such as resin. Furthermore, a case side surface, a case opposite surface, and the like other than the contact surface with the human body intended for energy intake also include an insulating material.

Fig. 2C illustrates a configuration in which the case 17 includes a case 17A including a non-metal such as resin or the like and a case 17B including a metal. A ground 19 on either the upper or lower surface of the device board 12 and the case 17B may be electrically connected to each other. That is, the case 17A including an insulating material on which the antenna element 11 is provided and the case 17B including a metal material constituting the opposite surface may be connected by a connection part 22 such as a screw, and the case 17B and the ground 19 of the device board 12 may be connected by a wire 23.

Furthermore, as illustrated in Figs. 3A and 3B, an insulated covered cable 24 may be further connected to the ground 19 that includes the copper foil pattern on the device board 12 by solder or the like to be grounded to the earth ground. The antenna element 11 is formed in a plate shape and is configured to be in contact with the human body. The antenna element 11 and the feeding point 15 can be directly connected to each other using a covered cable or the like.

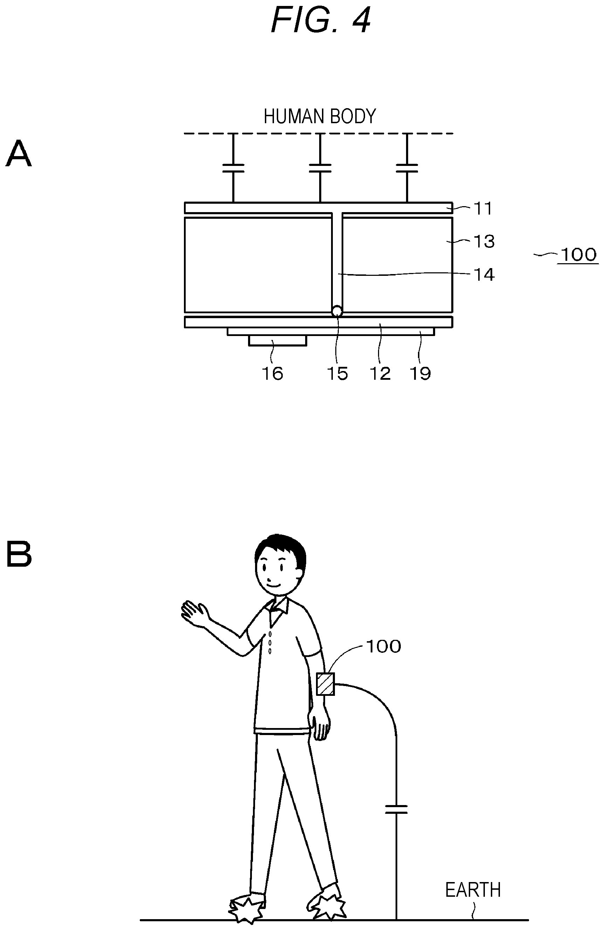

As illustrated in Figs. 4A and 4B, the antenna element 11 of the antenna part 1a described above is brought into contact with a part of the human body, for example, an arm. Since the human body is used as an antenna, the antenna device 1 can take in energy of both a quasi-electrostatic field such as noise, which is a leakage current, and radio waves such as broadcast waves. Note that it is sufficient that the antenna element 11 can be capacitively coupled to the human body even when a space or an insulator is interposed. Since the human body is used as an antenna, the antenna device 1 can take in energy of both a quasi-electrostatic field such as noise, which is a leakage current, and radio waves such as broadcast waves.

As illustrated in Fig. 4A, the human body and the antenna element 11 are electrically in contact with each other by capacitive coupling. For antenna device 1, the antenna element 11 and the human body is preferably in direct contact with each other, with surface contact basically being preferable to increase capacity. However, the contact structure is not limited to the surfaces, but may be a pin structure, a hemispherical structure, or a convex-concave mating structure in addition to the planar structure, as long as there is contact with the human body. The antenna device 1 can receive electric field energy and generate power, the antenna device 1 including: the antenna element 11 in contact with the human body; and the ground electrode of the device board 12, or a separate second antenna element 20.

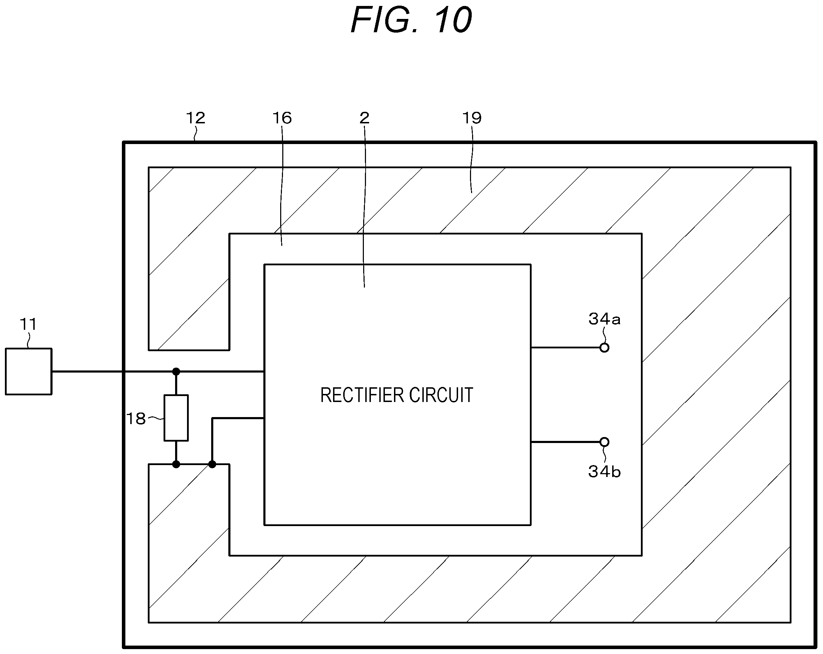

Furthermore, as illustrated in Fig. 4B, for example, in a state where an antenna device 100 (hatched portion) is attached to the arm, it can be considered that a pseudo ground is formed through capacitive coupling between the ground of the device board 12 or the ground of a separate second antenna element 19 (Fig. 10), and the earth ground. The antenna device 100 can receive a low frequency quasi-electrostatic field. When the antenna device 100 resonates at a low frequency such as 50 Hz, it is considered that the blood vessel appears as an antenna. As described above, the antenna device 100 can receive radio waves in a wide frequency range. Therefore, electric field energy can be taken in without being restricted by the place where the person wearing the antenna device according to the present technology is present.

In the example described above, the first antenna element 11 and the second antenna element 19 constitute the antenna part 100. The first antenna element 11 is a conductor that is connected to or in contact with the human body. The second antenna element 19 is a conductor different from the first antenna element 11, and is a conductor that is not connected to or in contact with the human body.

The antenna part 1a is a dipole structure antenna including the first antenna element 11 and the second antenna element 19. In the present disclosure, the dipole structure antenna is an antenna with a structure that transmits and receives an electric field using two antenna elements. Since the electric field is AC waves, on the conductor on which the electric field acts, there are always points where the voltage is high and points where the voltage is low at any frequency.

In general, the length of the conductor serving as the antenna element is set to a length corresponding to a wavelength of a frequency desired to be received. In the dipole structure antenna, the length of each antenna element is typically adjusted to the length of 1/4 of the wavelength of the frequency desired to be received. In this case, since the high and low voltages induced at the frequency desired to be received coincide with each other, the obtained power is maximized. In this structure, the sum of the lengths of the respective antenna elements is 1/2 of the wavelength. This is a so-called half-wavelength dipole antenna.

The human body to which the first antenna element 11 of the antenna part 1a is connected or in contact is insulated from the earth (GND) (in a floating state). Therefore, the human body functions as an antenna element on one side via the first antenna element 11.

As described above, on the conductor on which the electric field acts, there are always points of high and low voltages regardless of the frequency of the electric field. Therefore, when the electric field acts on the two antenna elements (first antenna element 11 and second antenna element 19), a current always flows through the two antenna elements. The current flowing through each antenna element is not necessarily the maximum current that can be extracted from the electric field, but in any case, the current (the energy of the electric field) can be extracted from each antenna element. The antenna part 1a uses this effect to receive the energy of the electric field.

Note that the configuration example of the antenna part 1a in the present disclosure also includes a configuration in which the second antenna element 19 is connected to the earth (GND) by using a cable. Such a configuration may be generally referred to as a monopole antenna. On the other hand, in the present configuration, the antenna part 1 is connected to the earth (GND) via the second antenna element 19, and there is no change in the configuration in which the electric field is received using the two antenna elements of the first antenna element 11 and the second antenna element 19. In this sense, the configuration in which the second antenna element 19 is connected to the earth (GND) as described above can also be said to be the dipole structure in the present disclosure.

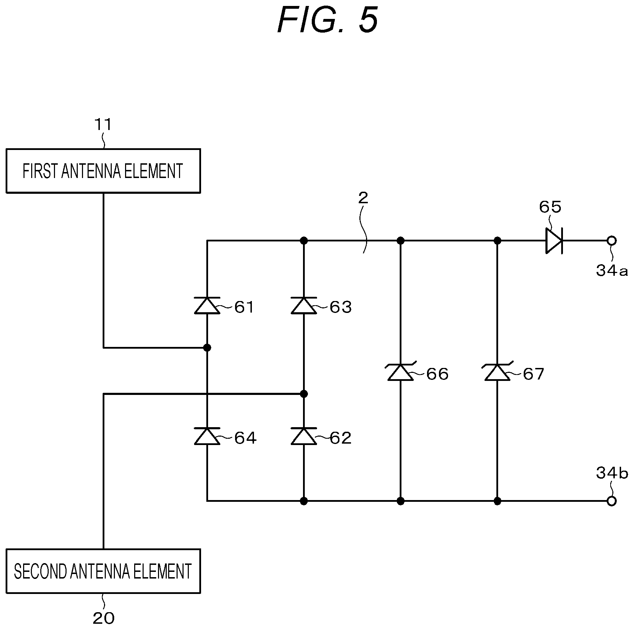

Fig. 5 illustrates an example of the rectifier circuit 2 connected to the antenna device 1. In the case of handling a small voltage such as an energy harvester, it is not impossible to rectify the voltage with an ordinary rectifier circuit, but a certain level of voltage is needed to store the energy quickly. In addition, a full-wave rectifier circuit is more effective due to its ability to increase the voltage of an AC signal and take in the entire voltage. Therefore, the full-wave rectifier circuit is used in the diode employed for rectification this time even when the loss of the diode is included.

In the rectifier circuit, it is important that the leakage current of the diode during reverse bias is very small. In a case where there is a leakage current, a full-wave rectifier circuit is suitable. As illustrated in Fig. 5, diodes 61 and 64 are connected in series, and diodes 63 and 62 are connected in series. The connection point between the anode of the diode 61 and the cathode of the diode 64 is connected to the first antenna element 11, and the connection point between the anode of the diode 63 and the cathode of the diode 62 is connected to the second antenna element 20. The connection point between the cathode of the diode 61 and the cathode of the diode 63 is connected to one output terminal 34a via a backflow prevention diode 65, and the connection point between the anode of the diode 64 and the anode pf the diode 62 is connected to the other output terminal 34b. An electrostatic countermeasure varistor 66 and an integrated circuit (IC) protection Zener diode 67 (e.g., a Zener voltage is 6.5 V) are connected in parallel between the output terminals 34a and 34b.

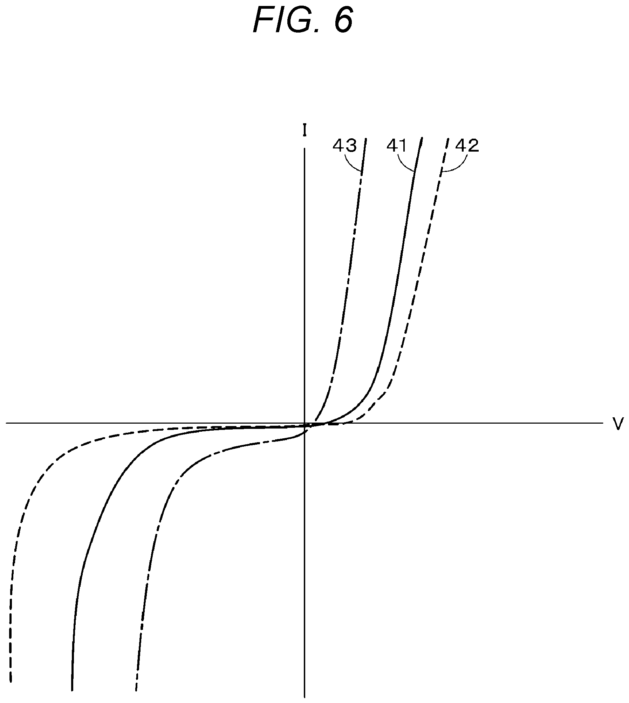

Note that this is configured by a discrete diode but may be configured by a dedicated IC. Fig. 6 and Table 1 illustrates results of measurements of a forward voltage Vf and a reverse current Is for diodes used in the rectifier circuit 4. As diode product number 1N60, silicon and germanium products were measured, and as the other product number ISS108, a germanium product manufactured by a different manufacturer was used for evaluation. In Fig. 6, a curve 42 is a characteristic of 1N60 (silicon), a curve 41 is a characteristic of 1N60 (germanium), and a curve 43 is a characteristic of ISS108 (germanium).

**[Table 1]**

| | Room Temperature | | Rectification in metal antenna |
|---|---|---|---|
| | Forward voltage Vf [mV] | Reverse current Is [µA] | |
| 1N60 (silicon) | 367 | 1 | ○ |
| 1N60 (germanium) | 303 | 7 | × |
| 1SS108 | 162 | 26 | × |

A current that flows when a voltage is applied in the reverse direction of the diode is the reverse current Is. The measurement data in Table 1 is data when 10 V is added in the reverse direction of the diode. The forward voltage Vf is a voltage at which a forward current (1 mA) starts to flow through the diode.

It has been found that in a case where the output of the antenna part 1a described above is rectified, diode 1N60 (silicon), in which the current does not flow in the reverse direction, can take in more power than the diode with a lower voltage e at which the current starts to flow in the forward direction. Since the rectified input is alternating current, the reverse current Is when the forward voltage Vf of the diode is applied in the reverse direction is data of 10 V in Table 1. Thus, from the data, the reverse currents Is at the time of application of the same voltage as Vf in the reverse direction are calculated to be 0.036 µA for 1N60 (silicon), 0.21 µA for 1N60 (germanium), and 0.5 µA for ISS108 (germanium). Therefore, the ratios of the reverse current Is at the forward current (1 mA)/forward voltage Vf are calculated to be 1/27778 for 1N60 (silicon), 1/4762 for 1N60 (germanium), and 1/2000 for ISS108 (germanium). That is, for the diode used in the rectifier circuit 2, the ratio described above needs to be larger than about 4700 times, and preferably, the ratio described above is 10,000 or more. As a result, among the three diodes listed as examples, 1N60 (silicon) has the most suitable characteristics.

Moreover, considering the diode characteristics, the reverse current Is at the time of application in the reverse direction is preferably small. The reverse resistance values are calculated, using the data of 10 V, to be 100 MΩ for 1N60 (silicon), 1.43 MΩ for 1N60 (germanium), and 0.38 MΩ for ISS108 (germanium). That is, the resistance value for preventing the current from flowing in the reverse direction is preferably large, and as the diode used in the rectifier circuit 2, the resistance value described above needs to be larger than 1.43 MΩ, and is preferably 10 MΩ or more. As a result, among the three diodes listed as examples, 1N60 (silicon) has the most suitable characteristics.

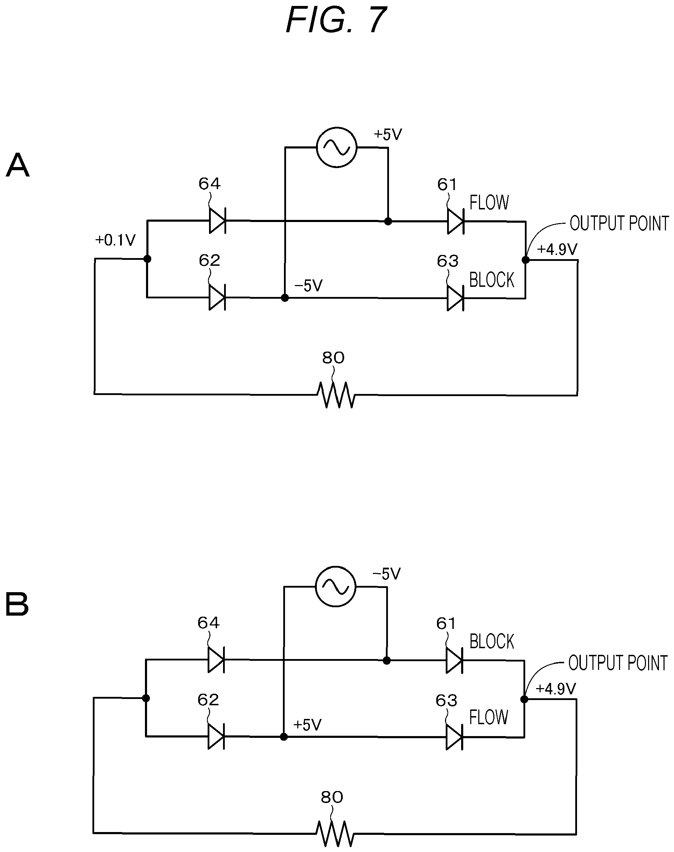

The operation of the full-wave rectifier circuit described above will be described. In the present technology, as described with reference to Fig. 5, the full-wave rectifier circuit is used as the rectifier circuit connected to the antenna device from the viewpoint of effective use of energy. As illustrated in Figs. 7A and 7B, in the full-wave rectifier circuit, four diodes of diodes 61 to 64 are used. A series circuit of the diodes 61 and 64 and a series circuit of the diodes 62 and 63 are connected in parallel, and AC is applied to both diodes of each series circuit to convert the circuit into direct current (DC). A load 80 is connected to the output point of the full-wave rectifier circuit. In addition, the electrostatic countermeasure varistor 66 and the IC protection zener diode 67 in Fig. 5 are omitted in Figs. 7A and 7B. Note that, when the current passes through the diode, a voltage drop occurs according to the flowing current, so that the output voltage at the output point is, for example, 4.9 V decreased by 0.1 V.

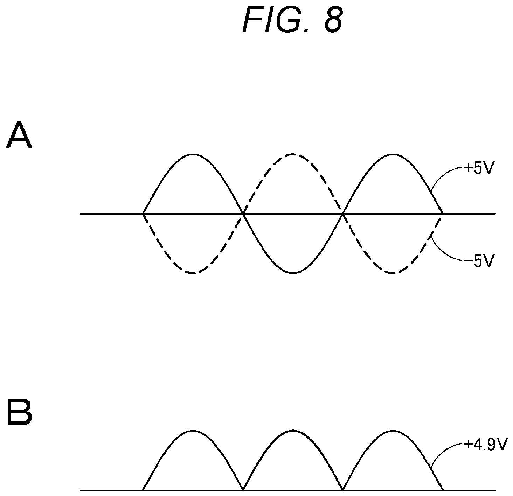

Fig. 7A illustrates a half-cycle, which is the positive period of an input AC power supply, when the current flows through the diodes 61 and 62, and the diodes 63 and 64 block the current. Fig. 7B illustrates a half-cycle, which is the negative period of the input AC power supply, when the current flows through the diodes 63 and 64 and the diodes 61 and 62 block the current. Therefore, the output illustrated in Fig. 8B is generated from the AC power supply illustrated in Fig. 8A. In Fig. 8A, the solid line represents +5.0, and the dotted line represents -5.0 V. Fig. 8B illustrates a voltage at the output point in Figs. 7A and 7B.

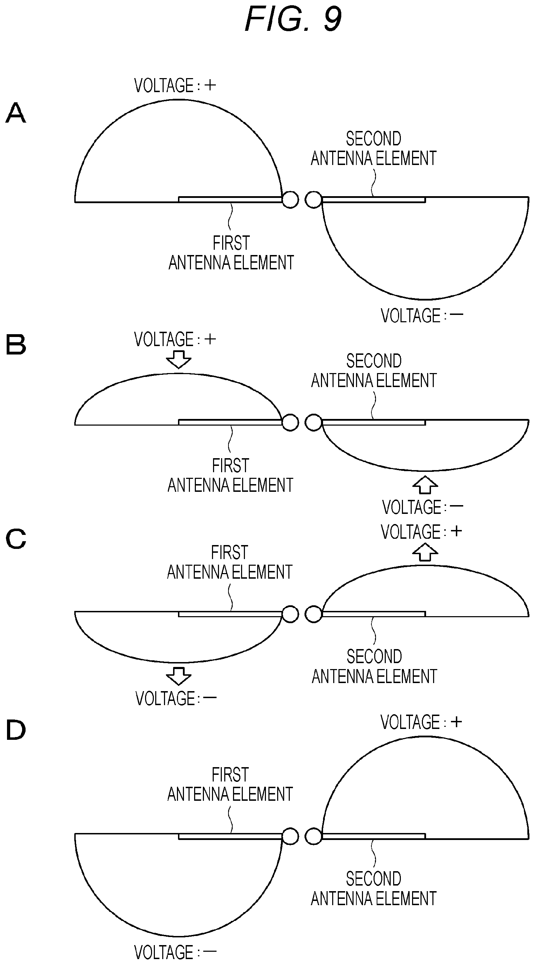

As schematically illustrated in Figs. 9A to 9D, the energy received from the antenna induces a voltage between the diodes 61 and 64, and between the diodes 62 and 63, and the voltage varies according to the frequency. That is, when a positive potential is applied to the first antenna element 11, a negative potential is applied to the second antenna element 20.

The diode allows only a larger potential to pass, and thus, in this example, only a positive potential of 5 V passes through the diode according to the frequency. These are added together in accordance with the frequency to form DC. At this time, the frequency component is left, and a ripple is also present, so that the frequency component is once stored in the capacitor and then converted into clean DC.

In the present technology, energy with not one frequency but various frequency components is present in an overlapping manner. Therefore, there is not only a case of one frequency, but also a case where high and low voltages are alternately generated, depending on the overlap of the frequencies. However, for simplicity of description and illustration, the figure represents the waveform as a schematic positive/negative waveform similar to a sine wave. For example, the positive voltage value is + 5 V, and the negative voltage value is -5 V.

As illustrated in Figure 10, the ground 19 that includes the copper foil pattern is formed on the device board 12 included in the antenna device 1. The first antenna element 11 and the ground 19 that includes the copper foil pattern on the device board 12 constitute the antenna part 1a. The ground 19 is the second antenna element. Furthermore, in a case where an electrostatic countermeasure is required, an electrostatic protection component, for example, a varistor 18 is inserted between the antenna element 11 in contact with or connected to the human body and the ground 19 that includes the copper foil pattern on the reception device. Note that the varistor 18 may be connected between an output terminal 34a and the ground 19.

The circuit part 16 includes the rectifier circuit 2. The rectifier circuit 2 does not overlap the ground 19 that includes the copper foil pattern on the device board 12. An input line output from the antenna element 11 to the rectifier circuit 2 is connected in series to the rectifier circuit without interposing a matching circuit. The charger 3 and the energy storage device 4 (not illustrated) may be included in the circuit part 16, or may be provided separately.

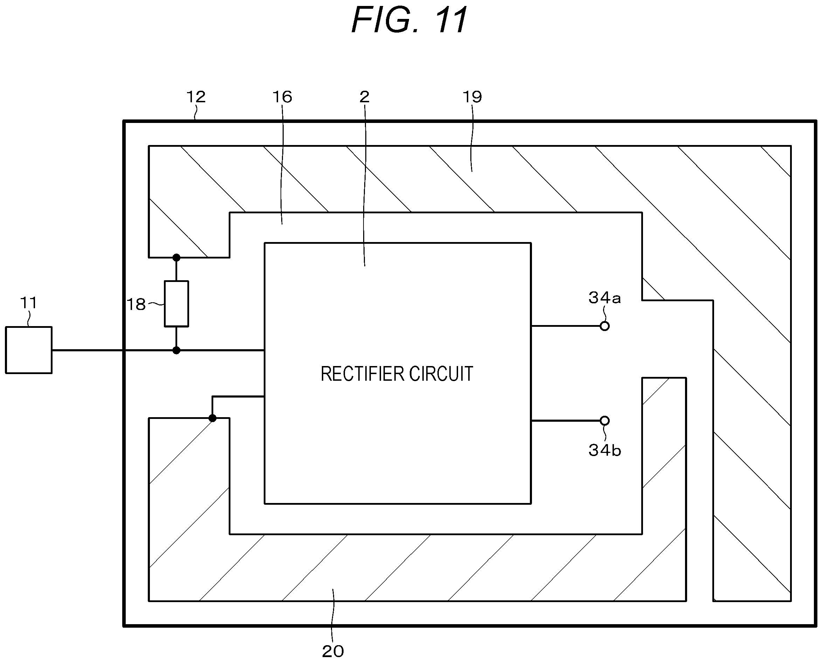

Next, as illustrated in Fig. 11, a separate second antenna element 20 (illustrated as a shaded region) including a copper foil pattern may be formed on the board described above. In this case, it is necessary to prevent the separate second antenna element 20 from contacting or being connected to the human body intended for energy intake.

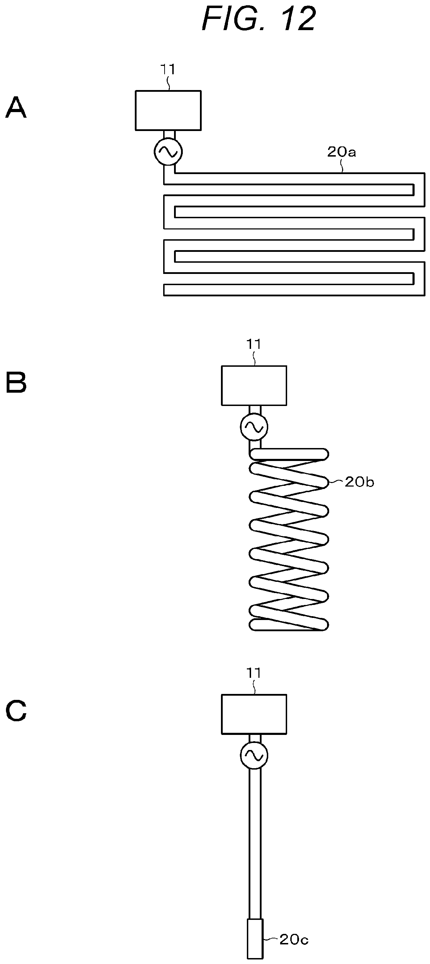

Other configurations of the second antenna element 20 are illustrated in Fig. 12. Fig. 12A illustrates a configuration of a meander line 20a, and Fig. 12B illustrates a configuration of a coil 20b. The coil 20b may be configured as a chip coil. Fig. 12C illustrates a configuration in which an inductor 20c is provided at the tip portion. These configurations can reduce the occupied area and increase the antenna length, thereby increasing the induced voltage. In addition, the second antenna element 20 may be configured as a plate-shaped antenna having broadband characteristics.

The antenna device 1 in which the human body and the antenna element 11 are in contact with each other by capacitive coupling has a structure in which the antenna is a human body and an electric field is generated with the ground of the antenna device 1 or with a separate conductor. Thereby, the receivable frequency is not restricted by the antenna shape. Furthermore, by employing a structure in which the ground of the antenna device 1 or a separate conductor is capacitively coupled to the earth ground, it is also possible to take in electric field energy in a quasi-electrostatic field other than radio waves. That is, power or noise leaking from a power cord and an inverter can be converted into energy. In this manner, the human body is treated as a conductor, and power induced in the human body itself between the human body and the ground of the antenna device 1 can be taken in.

The power generation device 1 of the present technology can supply energy to a sensor, which is used in a smart factory or a smart city and requires battery replacement or power supply, by being in contact with or connected to the sensor. This enables efficient energy utilization. Therefore, the power generation device 1 can be related to Goal 7, "Affordable and Clean Energy", of the Sustainable Development Goals (SDGs) adopted at the United Nation (UN) summit in 2015.

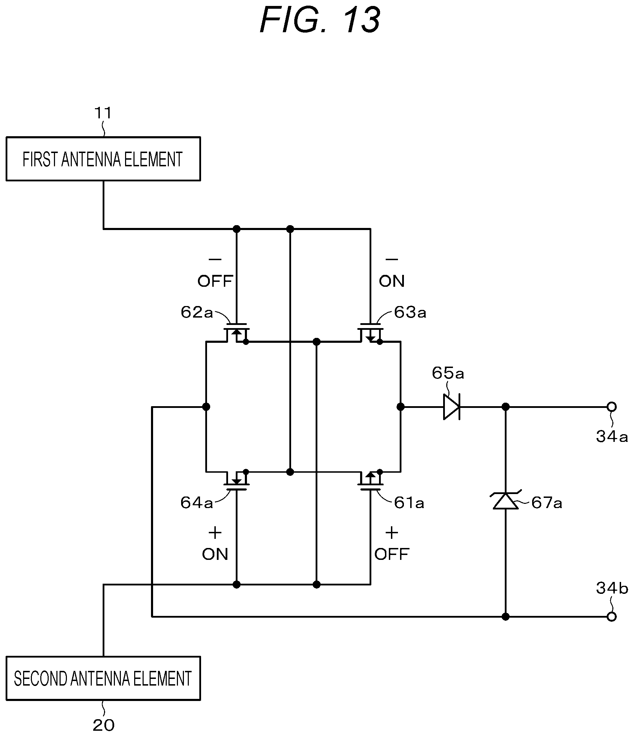

As the rectifier circuit 2, in addition to the configuration of the full-wave rectifier circuit using the diodes illustrated in Fig. 5, a rectifier circuit using a metal oxide semiconductor (MOS) field effect transistor (FET) instead of the diode as a switching element can be used, as illustrated in Fig. 13. That is, a rectifier circuit is configured by four FETs 61a, 62a, 63a, and 64a, a backflow prevention diode 65a, and a FET protection Zener diode 67a.

The FETs 61a and 63a are P-channel depletion-type MOSFETs, and when a negative voltage is applied to the gate, a current flows from the drain to the source. The FETs 62a and 64a are N-channel depletion-type MOSFETs, and when a positive voltage is applied to the gate, a current flows from the drain to the source.

The drain of the FET 61a and the source of the FET 64a are connected to each other, and the source of the FET 62a and the drain of the FET 63a are connected to each other. The connection point between the gates of the FETs 62a and 63a and the connection point between the drain of the FET 61a and the source of the FT 64a are connected to the antenna element 11. The connection point between the gates of the FETs 61a and 64a and the connection point between the drain of the FET 62a and the drain of the FET 63a are connected to the antenna element 20.

As illustrated in Fig. 13, in a phase in which the antenna element 11 side is - and the antenna element 20 side is +, the FET 62a is off, the FET 63a is on, the FET 61a is off, and the FET 64a is on.

The connection point between the source of the FET 61a and the source of the FET 63a is connected to one output terminal 34a via the backflow prevention diode 65a. The connection point between the drain of the FET 62a and the drain of the FET 64a is connected to the other output terminal 34b. The FET protection Zener diode 67a is connected between the output terminal 34a and the output terminal 34b. The four FETs 61a, 62a, 63a, and 64a may be configured as discrete or dedicated ICs.

In the rectifier circuit using the FET, a conduction form (N channel/P channel) of each FET may be exchanged. The rectifier circuit using the FET can be used instead of the rectifier circuit using the diode described above, and similar effects to those of the embodiment and the modifications thereof can be obtained. In particular, in a case where the frequency to be harvested is a low frequency such as 50 Hz, the conversion efficiency of the element is better in the FET than in the diode, and hence the FET may be used depending on the frequency of the device to be harvested.

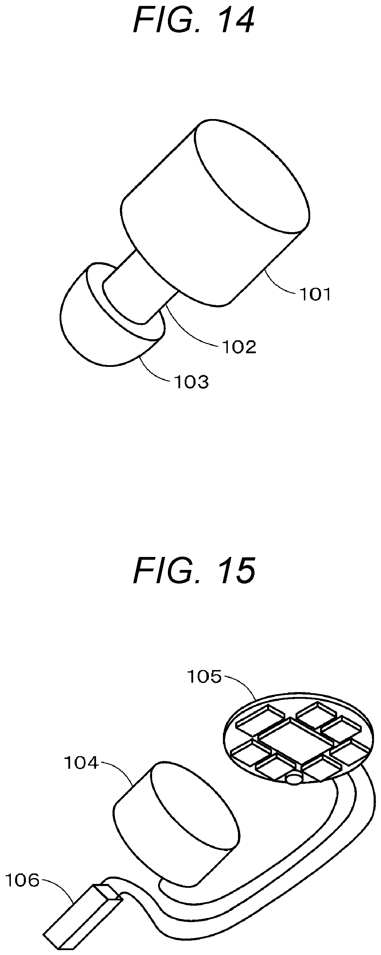

Hereinafter, one embodiment in which the present technology is applied to, for example, true wireless earphones will be described. As illustrated in Fig. 14, one of the true wireless earphones include a bottom case 101, a housing 102, and earpiece 103. Similarly to the existing true wireless earphones, as illustrated in Fig. 15, a lithium-ion secondary battery 104 and a main substrate 105 as energy storage devices are housed in the bottom case 101, and a driver unit 106 is housed in the housing 102.

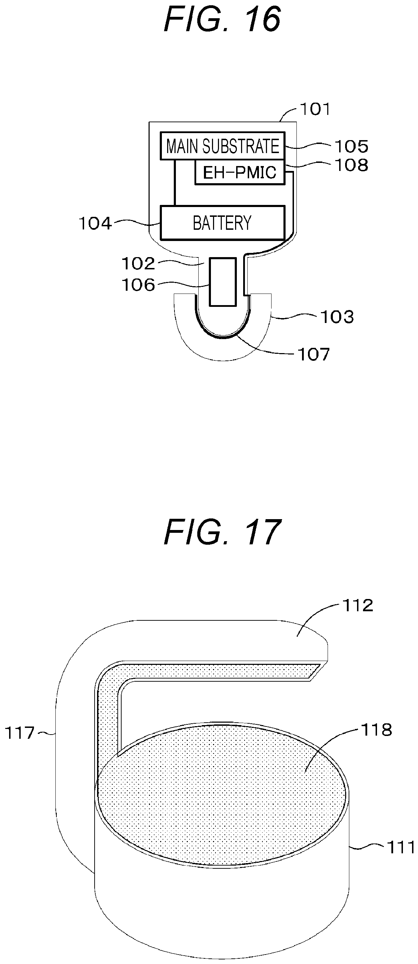

As illustrated in Fig. 16, in one embodiment, the entire earpiece 103 or a part of the earpiece 103 in contact with the vicinity of the ear canal is an electrode including a conductive material with appropriate elasticity. The electrode functions as the antenna element 11 of the power generation device described above. Wiring 107 connected to the inner surface of the earpiece 103 is extended to an energy harvester substrate 108 along the inner surface of the housing 102. The energy harvester substrate (denoted as EH-PMIC in Fig. 16) 108 includes the rectifier circuit 2 and a ground that includes a copper foil pattern as the second antenna element, similarly to the device board 12 described with reference to Fig. 10, for example. The main substrate 105 may also serve as the energy harvester substrate (EH-PMIC) 108.

For example, a circuit for Bluetooth (registered trademark) communication, an amplifier for driving a driver unit, a charge/discharge control circuit for the lithium-ion secondary battery, and the like are mounted on the main substrate 105. The communication scheme may be another scheme. Power from the rectifier circuit of the energy harvester substrate 108 is supplied to the charge/discharge control circuit, and the charge/discharge control circuit charges the lithium-ion secondary battery. The lithium-ion secondary battery can be charged by a dedicated charging device from a power supply terminal. A switching part is provided to switch between charging by the charging device and charging by the power generation device. Moreover, a display indicating a state of charge may be provided.

The power generation device described above can rectify electric field energy received using the human body as an antenna to generate power in a state where the conductive earpiece 103 is worn in the ear canal. Thus, the generated power can be used to charge the lithium-ion secondary battery 104. For example, the lithium-ion secondary battery 104 may be charged by the power generation device outside a period when music is being listened to with the wireless earphones. Moreover, an additional energy storage device such as a capacitor may be provided to temporarily store power generated by the power generation device.

By including the power generation device according to the present technology, the wireless earphones can reduce the depletion of the energy storage device such as the lithium-ion secondary battery 104, thereby extending the time before charging is required. In addition, it is not necessary to have a cable for charging.

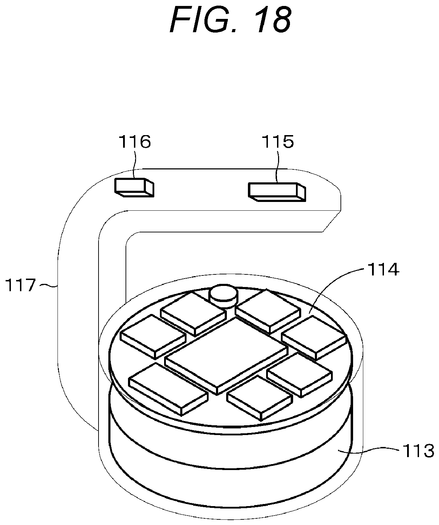

Fig. 17 illustrates another example in which the present technology is applied to a wireless earphone. This wireless earphone is a bone-conduction-type, and includes a columnar base housing portion 111 and a vibration unit housing portion 112. As illustrated in Fig. 18, a lithium-ion secondary battery 113 and a main substrate 114 are housed in the base housing portion 111. For example, a communication unit for Bluetooth (registered trademark), an amplifier for driving a driver unit, a charge/discharge control circuit for the lithium-ion secondary battery, and the like are mounted on the main substrate 114. In addition, an energy harvester substrate (not illustrated) is provided together with the main substrate 114.

The vibration unit housing portion 112 houses a vibration unit 115 and a microphone 116 for noise canceling. Note that, although not illustrated, a power switch, a volume increasing/decreasing switch, a charging terminal, and the like are provided on, for example, the side surface of the base housing portion 111.

The vibration unit 115 is housed in a distal end portion of a substantially L-shaped arm 117 raised from the base housing portion 111 so that the vibration surface of the vibration unit 115 in the vibration unit housing portion 112 faces the end surface of the base housing portion 111. The arm 117 has elasticity, and can vary a distance between the base housing portion 111 and the vibration unit housing portion 112. That is, the wireless earphone is worn to sandwich the auricle between the base housing portion 111 and the vibration unit housing portion 112 so that the base housing portion 111 is disposed on the back side of the auricle, and the vibration unit housing portion 112 is disposed in the vicinity of the concha of the ear.

An electrode 118 is formed on a surface portion (indicated by a dotted line region in Fig. 17), which is in contact with the auricle, on the surface of the case (base housing portion 111 and vibration unit housing portion 112) of the bone conduction type wireless earphone as described above. The electrode 118 has a function as the antenna element 11 of the power generation device described above. Wiring (not illustrated) is provided between the electrode 118 and the energy harvester substrate. The energy harvester substrate includes a rectifier circuit and a ground that includes a copper foil pattern 19 as a second antenna element, similarly to the device board 12 described with reference to Fig. 10, for example.

Power from the rectifier circuit of the energy harvester substrate is supplied to the charge/discharge control circuit, and the charge/discharge control circuit charges the lithium-ion secondary battery 113. A power supply terminal is provided in the base housing portion 111, and the lithium-ion secondary battery can be charged using a charging device or USB charging. A switching part is provided to switch between charging by the charging device and charging by the power generation device. Moreover, a display indicating a state of charge may be provided.

The power generation device described above can generate power by rectifying energy received using the human body as an antenna in a state where the power generation device is worn on the auricle of the human body. Thus, the generated power can be used to charge the lithium-ion secondary battery 113. A capacitor that temporarily stores the power obtained by the power generation device may be provided, and the lithium-ion secondary battery 113 may be charged with the power held in the capacitor, for example, outside a period when music is being listened to with the wireless earphones.

By including the power generation device according to the present technology, the wireless earphones can reduce the depletion of the energy storage device such as the lithium-ion secondary battery 113, thereby extending the time before charging is required. In addition, it is not necessary to have a cable for charging.

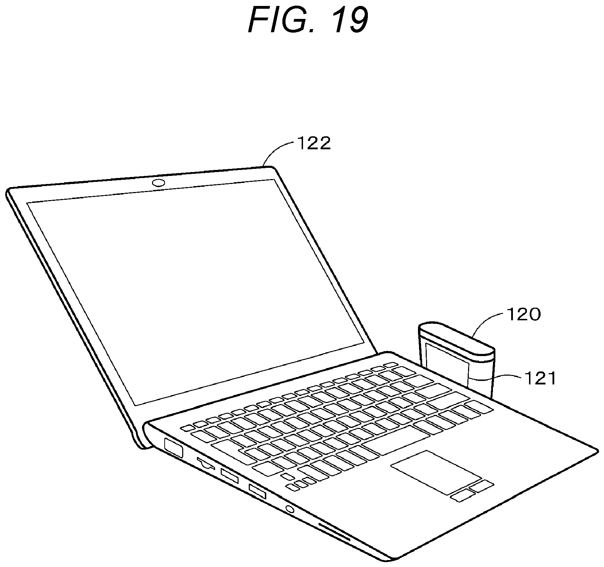

In a case where the wireless earphone is charged, as illustrated in Fig. 19, the wireless earphone is housed in a dedicated charger 120, and the AC adapter is connected to the charger 120. An electrode 121 of a power generation device used in the present technology is attached to the side surface of the charger. The electrode 121 has a function as the antenna element 11 of the power generation device described above. Furthermore, an energy harvester substrate is housed inside the charger. The energy harvester substrate includes the rectifier circuit 2 and the ground 19 that includes a copper foil pattern as a second antenna element, similarly to the device board 12 described with reference to Fig. 10, for example. Wiring (not illustrated) is provided between the electrode 121 and the energy harvester substrate. A charging circuit is provided to charge the lithium-ion secondary battery housed inside with power generated by a power generation device that includes the electrode 121 and the energy harvester substrate. A switching part is provided to switch between charging by the charger 120 and charging by the power generation device. Moreover, a display indicating a state of charge may be provided.

Such a charger 120 is placed in contact with or close to a laptop personal computer 122. The laptop personal computer 122 includes a keyboard, and electronic components such as a circuit board, a processor attached to the circuit board, and a switching power supply, are present in a body case. The electronic components generate spatial noise.

The electrode 121 of the charger 120 is spatially coupled to the circuit board of the laptop personal computer 122 and electronic components mounted on the circuit board. Therefore, the antenna device including the electrode 121 receives the components of the spatial noise emitted from the circuit board and the electronic component. Therefore, even in a state where the AC adapter is not being operated, nor is USB charging or similar methods being performed, the wireless earphone can be charged by the charger 120. Note that the charger 120 is provided with a lithium-ion secondary battery and a charging circuit, and charging can be performed through USB charging, using the laptop personal computer 122.

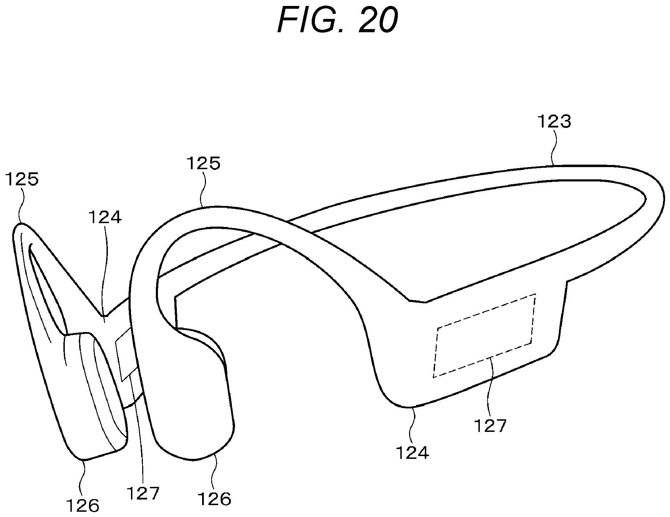

Fig. 20 is a perspective view of still another example of the wireless earphones to which the present technology is applied. Located behind the head and across the temples of the face, left and right base housings 124 are attached to both ends of an elastic band 123. An ear hooking band 125 is extended from the base housing portion 124, and a vibration unit housing portion 126 is attached to the end of the ear hooking band 125. The vibration unit housing portion 126 is pressed against the vicinity of both sides of the face in front of the auricle.

A lithium-ion secondary battery and a main substrate are housed in the base housing portion 124. A power supply terminal is provided, and the lithium-ion secondary battery can be charged using an external power supply, for example, USB charging. A switching part is provided to switch between charging by an external power supply and charging by a power generation device. Moreover, a display indicating a state of charge may be provided. For example, a communication unit for Bluetooth (registered trademark), an amplifier for driving a driver unit, a charge/discharge control circuit for the lithium-ion secondary battery, and the like are mounted on the main substrate. Furthermore, an energy harvester substrate is housed together with the main substrate. The energy harvester substrate includes the rectifier circuit 2 and the ground 19 that includes a copper foil pattern as a second antenna element, similarly to the device board 12 described with reference to Fig. 10, for example. An electrode 127 is attached to the inner side surface of the base housing portion 124. The electrode 127 has a function as the antenna element 11 of the power generation device described above. Wiring (not illustrated) is provided between the electrode 127 and the energy harvester substrate.

The vibration unit housing portion 126 houses a vibration unit and, for example, a microphone for noise canceling. Note that, although not illustrated, a power switch, a volume increasing/decreasing switch, a charging terminal, and the like are provided on, for example, the lower surface of the base housing portion 124. A power switch, a volume increasing/decreasing switch, and the like may be provided in the vibration unit housing portion 126.

The power generation device including the electrode 127 and the energy harvester substrate can rectify electric field energy received using the human body as an antenna to generate power in a state where the power generation device is mounted on the head of the human body. Thus, the generated power can be used to charge the lithium-ion secondary battery. Note that the lithium-ion secondary battery is charged by the power generation device during a period in which the wireless earphone is worn, outside a period when music is being listened to with the wireless earphones. Moreover, an energy storage device such as a capacitor may be provided to temporarily store power generated by the power generation device. Note that the electrode 127 may be disposed inside the ear hooking band 125 or at a portion of the vibration unit housing portion 126 in contact with the body.

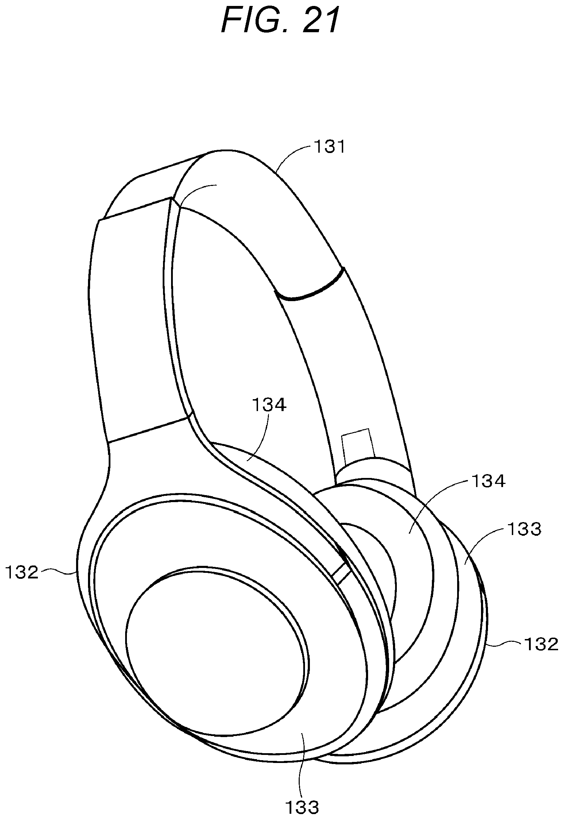

Fig. 21 is a perspective view of still another example of wireless headphones to which the present technology is applied. The headphones are of the type where the headband 131 is placed on the head. Left and right headphones 132 are attached to both ends of the headband 131. The headphones 132 include a housing 133 and an ear pad 134. The housing 133 functions as a housing portion that houses an audio processing circuit, a driver unit, a speaker (not illustrated), for example, a communication unit for Bluetooth (registered trademark), a lithium-ion secondary battery, and the like. The lithium-ion secondary battery can be charged using an external power supply, for example, USB charging. A switching part is provided to switch between charging by an external power supply and charging by a power generation device.

The housing 133 is formed using a synthetic resin such as plastic. For example, the audio processing circuit performs predetermined audio signal processing, such as signal amplification processing, equalizing processing, and noise canceling processing, on an audio signal that drives a speaker. The driver unit and the speaker are audio output means that output audio signals processed by the audio processing circuit as audio. Moreover, the housing 133 houses an energy harvester substrate, which includes the rectifier circuit 2 and the ground 19 including a copper foil pattern as a second antenna element, similarly to the device board 12 described with reference to Fig. 10, for example. The main substrate may also serve as an energy harvester substrate.

The ear pad 134 is provided on the surface of the housing 133 on the side facing the temporal region of the head of a user. The ear pad 134 is configured to have elasticity, and functions as a cushioning member between the housing 133 and the temporal region of the user's head by being interposed between the housing 133 and the temporal region of the user's head. That is, the ear pad 134 prevents the housing 122, including a hard material difficult to deform, from directly contacting the temporal region of the user's head and giving discomfort and pain to the user when the headphones are worn.

The ear pad 134 includes a cushioning material formed in an annular shape using a flexible conductive resin. The cushioning material directly contacts the temporal region of the user's head when the headphones are worn. By using the conductive resin as the ear pad 134, the conductive resin can be used as an electrode of an energy harvester power generation device. An antenna is constituted by the energy harvester substrate in the housing 133 and the conductive resin (electrode) constituting the ear pad 134, and energy received using the human body as an antenna can be rectified to generate power. Thus, the generated power can be used to charge the lithium-ion secondary battery. For example, the lithium-ion secondary battery can be charged by the power generation device in a period in which the wireless headphones are worn, outside a period when music is being listened to with the wireless headphones. Note that an energy storage device such as a capacitor may be provided to temporarily store power generated by the power generation device. In addition, the electrode of the energy harvester power generation device may be provided on the inner surface of the headband 131 in contact with the head.

By including the power generation device according to the present technology, the wireless headphones can reduce the depletion of the energy storage device such as the lithium-ion secondary battery, thereby extending the time before charging is required. In addition, it is not necessary to have a cable for charging.

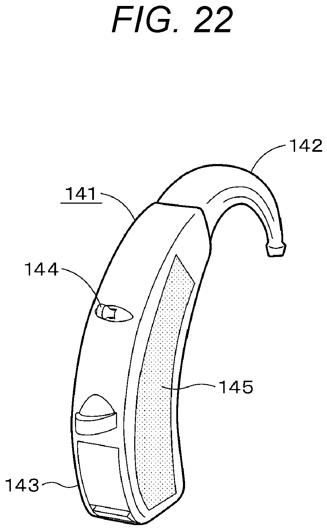

The present technology can also be applied to a hearing aid, for example, an ear-hooking-type hearing aid as illustrated in Fig. 22. A hook 142 shaped to be hooked on the earlobe is led out from a hearing aid body 141. Although not illustrated, a tube is attached to the tip of the hook 142, and an earphone is attached to the tip of the tube. The earphone is inserted into the ear canal. A sound inlet of a microphone is provided on the surface of the hook 142 opposite to the surface that contacts the head.

The hearing aid body 141 is provided with an audio circuit that amplifies an audio signal from the sound inlet and supplies the amplified audio signal to the earphone, a lithium-ion secondary battery, a charging circuit, an energy harvester substrate, and the like. The lithium-ion secondary battery can be charged using an external power supply, for example, USB charging. A switching part is provided to switch between charging by an external power supply and charging by a power generation device. An electrode (indicated by a dotted line region) 145 is provided on the surface of the hearing aid body 141 in contact with the head (the rear side of the earlobe). The electrode 145 and the energy harvester substrate are electrically connected to constitute an antenna. An AC signal generated by using the human body as an antenna is extracted, the AC signal is rectified by a rectifier circuit, and the lithium-ion secondary battery is charged by the rectified output.

By including the power generation device according to the present technology, the hearing aid can reduce the depletion of the energy storage device such as the lithium-ion secondary battery, thereby extending the time before charging is required. In addition, it is not necessary to have a cable for charging.

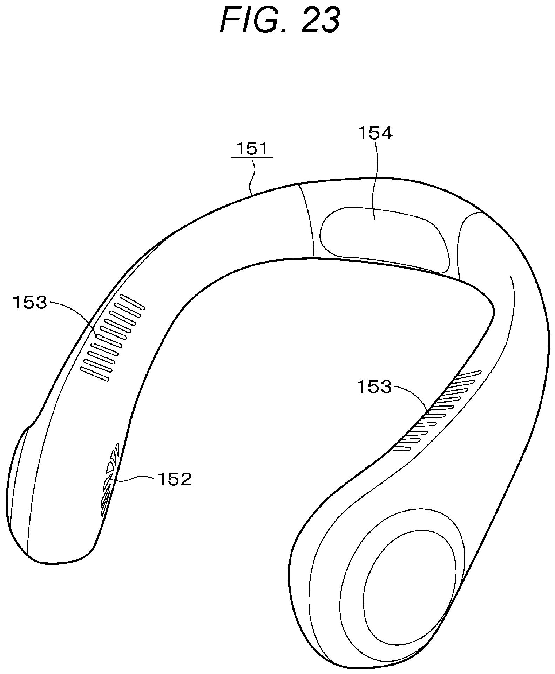

Fig. 23 illustrates an example of a neck cooler (neck-hanging-type fan) as a temperature adjustment device to which the present technology is applied. A fan is housed at both ends of a U-shaped cooler body 151 surrounding the neck, and the air sucked from an intake port 152 is blown out from an exhaust port 153. The blown air is blown out upward from the lower side of the jaw. Note that an intake port is also provided outside the central portion of the cooler body 151.

To achieve cordless operation, a lithium-ion secondary battery is housed in the cooler body 151. Moreover, the cooler body 151 houses an energy harvester substrate, which includes the rectifier circuit 2 and the ground 19 including a copper foil pattern as a second antenna element, similarly to the device board 12 described with reference to Fig. 10, for example. A substantially rectangular electrode 154 is attached to the inner surface of the rear side of the cooler body 151. When the neck cooler is used, the electrode 154 contacts the rear side (back side) of the neck. The electrode 154 and the energy harvester substrate in the cooler body 151 are electrically connected to constitute an antenna. An AC signal generated by using the human body as an antenna is extracted, the AC signal is rectified by a rectifier circuit, and the lithium-ion secondary battery is charged by the rectified output.

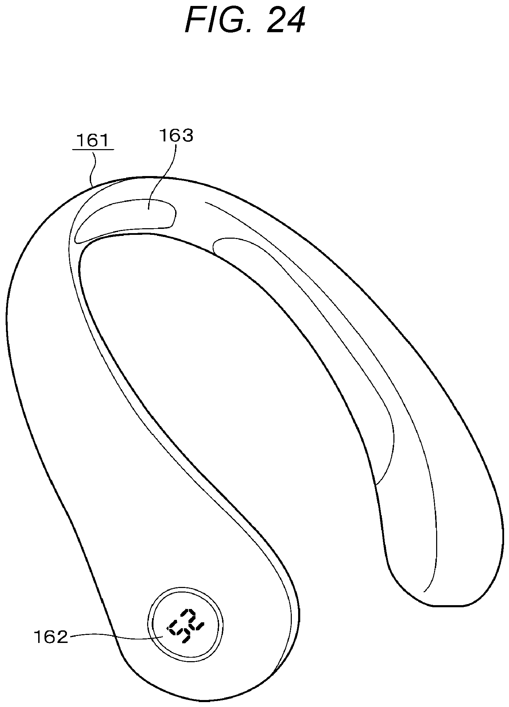

Fig. 24 illustrates an example of a neck warmer (neck-hanging-type warmer) as a temperature adjustment device to which the present technology is applied. A warmer body 161, having a U shape around the neck, houses a heat generation element, a lithium-ion secondary battery, a charging circuit, a temperature adjusting part, and the like. A fan may be housed. Furthermore, the warmer body 161 is provided with a liquid crystal display 162 that displays a set temperature. Although not illustrated, a power switch, a temperature control lever, and the like are provided in the warmer body 161. A power supply terminal is provided, and the lithium-ion secondary battery can be charged using an external power supply, for example, USB charging. A switching part is provided to switch between charging by an external power supply and charging by a power generation device.

Moreover, the warmer body 161 houses an energy harvester substrate, which includes the rectifier circuit 2 and the ground 19 including a copper foil pattern as a second antenna element, similarly to the device board 12 described with reference to Fig. 10, for example. A substantially rectangular electrode 163 is attached to the inner surface of the rear side of the warmer body 161. When the neck warmer is used, the electrode 163 contacts the rear side (back side) of the neck. The electrode 163 and the energy harvester substrate in the warmer body 161 are electrically connected to constitute an antenna. An AC signal generated by using the human body as an antenna is extracted, the AC signal is rectified by a rectifier circuit, and the lithium-ion secondary battery is charged by the rectified output.

By including the power generation device according to the present technology, the neck warmer can reduce the depletion of the energy storage device such as the lithium-ion secondary battery, thereby extending the time before charging is required. In addition, it is not necessary to have a cable for charging.

Note that the neck cooler may have the function of a neck warmer, or the neck warmer may have the function of a neck cooler.

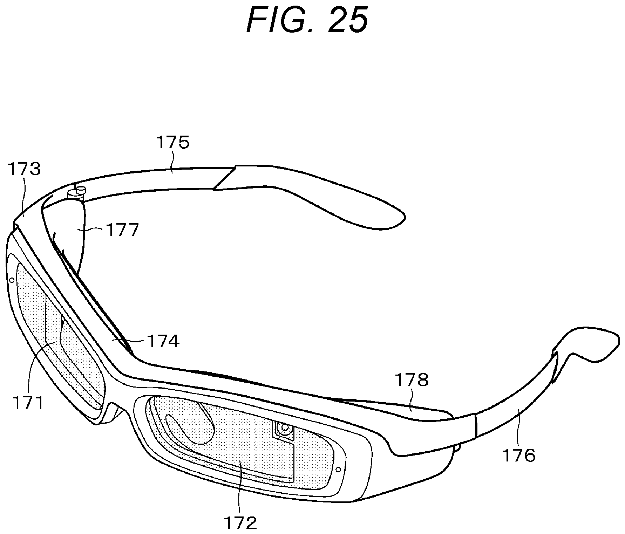

Fig. 25 illustrates an example of smart glasses (eyeglass-type terminal) to which the present technology is applied. The smart glasses can display digital information such as text, symbols, and images superimposed on a real landscape in front of the eyes. That is, a lightweight and thin image display device display module dedicated to transmissive smart glasses is mounted.

In an example of the smart glasses, as illustrated in Fig. 25, the image display has a glasses-type configuration. That is, similarly to normal eyeglasses, a frame 173 for holding a right image display 171 and a left image display 172 is provided in front of the eyes. The frame 173 includes a front portion 174 disposed in front of the observer and two temple portions 175 and 176 rotatably attached to both ends of the front portion 174 via hinges. The frame 173 is produced from the same material as a material constituting ordinary eyeglasses, such as metal, alloy, plastic, or a combination thereof. Note that a headphone part may be provided.

The right image display 171 and the left image display 172 are arranged to be positioned in front of the right eye and the left eye of the user, respectively. The temple portions 175 and 176 hold the image displays 171 and 172 on the user's head. A right display drive part 177 is disposed inside the temple portion 175 at a connection position between the front portion 174 and the temple portion 175. A left display drive part 178 is disposed inside the temple portion 176 at a connection position between the front portion 174 and the temple portion 176.

Although not illustrated in Fig. 25, an acceleration sensor, a gyroscope, an electronic compass, a microphone/speaker, or the like may be mounted on the frame 173. Furthermore, an imaging device is attached, and still images/moving images can be captured. Moreover, a controller connected to the eyeglass portion by, for example, a wireless or wired interface is provided. The controller is provided with a touch sensor, various buttons, a speaker, a microphone, and the like. Moreover, it has a function of cooperating with an electronic device such as a smartphone. For example, it is possible to provide information according to the situation of the user by utilizing the GPS function of the smartphone.

Moreover, the right display drive part 177 and the left display drive part 178 each house an energy harvester substrate, which includes the rectifier circuit 2 and the ground 19 including a copper foil pattern as a second antenna element, similarly to the device board 12 described with reference to Fig. 10, for example. Each of the temple portions 175 and 176 includes a conductor and functions as an electrode of a power generation device. In this case, two sets of power generation devices are configured, and the lithium-ion secondary battery in the right display drive part 177 and the left display drive part 178 can be charged by the respective power generation devices. A power supply terminal is provided, and the lithium-ion secondary battery can be charged using an external power supply, for example, USB charging. A switching part is provided to switch between charging by an external power supply and charging by a power generation device. Note that the electrodes of the power generation device may be provided on the nose pad.

When the smart glasses are used, the temple portions 175 and 176 approach or contact the side surfaces of the head. The temple portions 175 and 176 (electrodes) and the energy harvester substrates in the right display drive part 177 and the left display drive part 178 are electrically connected to constitute an antenna. An AC signal generated by using the human body as an antenna is extracted, the AC signal is rectified by a rectifier circuit, and the lithium-ion secondary battery is charged by the rectified output.

By including the power generation device according to the present technology, it is possible to reduce the depletion of the energy storage device such as the lithium-ion secondary battery, thereby extending the time before charging is required. In addition, it is not necessary to have a cable for charging.

The power generation device according to the present technology can also be applied to, for example, rings, bracelets, necklaces, anklets, handles of bags, and the like, in addition to the true wireless earphones, wireless earphones, wireless headphones, hearing aid, neck cooler, neck warmer, and smart glasses described above.

The power generation device of the present technology can supply energy to an electronic device, which is used as a wearable device and requires battery replacement or power supply, by being in contact with or connected to the electronic device. This enables efficient energy utilization. Therefore, the power generation device 1 can be related to Goal 7, "Affordable and Clean Energy", of the Sustainable Development Goals (SDGs) adopted at the United Nation (UN) summit in 2015.

Although the embodiments of the present technology have been specifically described above, the present technology is not limited to the embodiments described above, and various modifications based on the technical idea of the present technology can be made. For example, other chargeable batteries may be provided in addition to the lithium-ion secondary battery. In addition, one or a plurality of optionally selected aspects of the modifications may be appropriately combined. Furthermore, the configurations, methods, steps, shapes, materials, numerical values, and the like of the embodiments described above can be combined with each other without departing from the gist of the present technology. For example, power generation using the present technology and natural energy, for example, solar power generation or a thermoelectric conversion element may be used in combination to store energy.

### REFERENCE SIGNS LIST

1, 100 Antenna device
2 Rectifier circuit
11 First antenna element
12 Device board
15 Feeding point
20, 20a, 20b, 20c Second antenna element
103 Earpiece
118, 121, 127, 145, 154, 163 Electrode
134 Ear pad
175, 176 Temple portion

## Claims

1. An electronic device comprising
a rectifier circuit that receives electric field energy of a radio wave or a quasi-electrostatic field in space and rectifies an alternating current (AC) signal into a direct current (DC), wherein
an antenna part is provided to include a first antenna element that is a conductor to be used in contact with a human body in a state where the human body is not grounded to a ground that is an earth; and a second antenna element that is a conductor different from the first antenna element and is provided so as not to be in contact with the human body,
an input line is connected in series to the rectifier circuit, the input line carrying an AC signal, from AC signals output from the antenna part, output to the rectifier circuit from the first antenna element that is used in contact with the human body,
an energy storage device is provided to store an output of the rectifier circuit, and
a contact surface of the first antenna element with the human body includes an electrode including any one or a combination of gold, silver, aluminum, copper, iron, nickel, an alloy, a conductive resin, and a conductive rubber.

2. The electronic device according to claim 1, further comprising a communication means.

3. The electronic device according to claim 1, further comprising a power supply terminal.

4. The electronic device according to claim 1, wherein the electronic device is configured as earphones or a hearing aid.

5. The electronic device according to claim 4, wherein the earphones or the hearing aid include an earpiece in which the electrode is disposed.

6. The electronic device according to claim 5, wherein the earpiece includes a conductive resin, and metal wiring is formed on a wearing surface of the earpiece.

7. The electronic device according to claim 4, wherein the earphones or the hearing aid are of an ear-hooking-type.

8. The electronic device according to claim 4, wherein the earphones or the hearing aid include an ear hook portion provided with the electrode.

9. The electronic device according to claim 1, wherein the electronic device is configured as a headphone.

10. The electronic device according to claim 9, wherein the headphones include an ear pad on which the electrode is disposed.

11. The electronic device according to claim 1, wherein the electronic device is configured as a neck-hanging-type temperature adjustment device.

12. The electronic device according to claim 11, wherein the electrode is disposed at a position close to or in contact with a human body in the neck-hanging-type temperature adjustment device.

13. The electronic device according to claim 1, wherein the electronic device is configured as smart glasses.

14. The electronic device according to claim 13, wherein the smart glasses include a temple provided with the electrode.
